Europäisches Patentamt

European Patent Office

Office européen des brevets

(11) Veröffentlichungsnummer: **0 064 311**
**A1**

(12) **EUROPÄISCHE PATENTANMELDUNG**

(21) Anmeldenummer: **82200475.0**

(22) Anmeldetag: **20.04.82**

(51) Int. Cl.³: **B 01 J 2/06**
**C 01 B 17/00, C 10 C 3/16**

(30) Priorität: **29.04.81 DE 3116914**

(43) Veröffentlichungstag der Anmeldung:
**10.11.82 Patentblatt 82/45**

(84) Benannte Vertragsstaaten:
**AT BE CH DE FR GB IT LI LU NL SE**

(71) Anmelder: **CHEMISCHE WERKE HÜLS AG**
**Postfach 1320**
**D-4370 Marl 1(DE)**

(72) Erfinder: **Hilt, Walter**
**Overkampshof 12**
**D-4690 Herne 1(DE)**

(72) Erfinder: **Liebing, Heinz**
**Königsstrasse 13**
**D-4690 Herne 2(DE)**

(72) Erfinder: **Schweppe, Manfred**
**Overwegstrasse 34**
**D-4690 Herne 1(DE)**

(72) Erfinder: **Wetter, Klaus, Dr.**
**Kotthaushang 5**
**D-4300 Essen 16(DE)**

(74) Vertreter: **Steil, Hanna, Dipl.-Chem.**
**RSP PATENTE - PB 40 Herzogstrasse 28 Postfach 2840**
**D-4690 Herne 2(DE)**

(54) **Verbesserung des Prillverfahrens für schmelzbare Stoffe unter Vorlage einer Kühlflüssigkeit.**

㊐ Die Erfindung betrifft ein Verfahren zum Prillen von niedrigschmelzenden, in Wasser oder anderen Kühlflüssigkeiten unlöslichen Stoffen, wie Pech, thermoplastische Kunststoffe, Natur- oder Kunstharze unter Vorlage von Kühlflüssigkeiten. Besonders geeignet ist sie zum Prillen von Schwefel in vorgelegtes, gegebenenfalls Tenside oder andere Zusatzstoffe enthaltendes Wasser. Dabei wird eine Treibstrahlpumpe am unteren Ende des die Kühlflussigkeit enthaltenden Prillturms verwendet und das Kühlmedium, das gleichzeitig und zusätzlich als Treibflüssigkeit dient, im Kreislauf geführt. Die gebildeten Prills werden daraus - gegebenenfalls unter Zwischenschaltung eines Absetzbehälters - mit Hilfe eines Spannwellensiebes von der Kühlflüssigkeit abgetrennt und entwässert. Anschließend ist das Filtrat erneut als Treib- bzw. Kühlflüssigkeit einsetzbar.

## Verbesserung des Prillverfahrens für schmelzbare Stoffe unter Vorlage einer Kühlflüssigkeit

Als Handelsform für Schwefel erlangen Prills - neben der vor allem in den USA bevorzugten flüssigen Form - zunehmende Bedeutung. (vergleiche Verfahrenstechnik 1 (1967) 167-68)

Die Prills haben Durchmesser von 0,5 - 6 mm, vorzugsweise von 3 - 6 mm oder sogar von 3 - 4 mm. Sie besitzen Schüttgewichte von 1,1 - 1,4 kg/l und weisen Schüttwinkel von 27 - 35 ° auf.

Prills aus Naßverfahren besitzen gewöhnlich einen Wassergehalt von etwa 2 - 8 Gew.-%. Nach Trocknung verbleiben Restfeuchten von etwa 0,5 Gew.-% oder sogar nur von 0,1 Gew.-%.

Die Prills werden aus flüssigem Schwefel, vorzugsweise aus der Schwefelschmelze von Frash- oder Claus-Anlagen im Trocken- oder Naßverfahren gewonnen. Luftprill-Anlagen erfordern umfangreiche Sicherheitsvorkehrungen. Daher haben vor allem die Naßprill-Verfahren größere Bedeutung erlangt. (vergleiche Aufbereitungstechnik 1970 Nr. 5, S. 278/79)

Bei diesen Verfahren läßt man Schwefelschmelze durch eine oder mehrere Lochplatten (Düsenböden) in einen mit Wasser gefüllten Prillbehälter oder Prillturm fließen bzw. tropfen oder durch Düsenlanzen versprühen (US-PS 3 637 351).

Das vorgelegte Wasser ist gegebenenfalls vorgewärmt und/oder es enthält Zusätze, die schützende Umhüllungen um die Prillkörner bilden und eine Agglomerierung der gebildeten Teilchen verhindern sollen. (s. z.B. DE-AS 1 300 514)

Die Kügelchen werden meist mechanisch vom Wasser getrennt und gegebenenfalls verschiedenen Trocknungsverfahren unterworfen. Die Prillverfahren verlaufen durchweg chargenweise und benötigen mehrere Stufen und zahlreiche Apparate. Sie benötigen daher auch relativ viel Wartungspersonal.

Es wurde nun gefunden, daß man das Prillverfahren durch die Verwendung einer Treibstrahlpumpe am unteren Ende des Prillturms zum Absaugen der Prills wesentlich vereinfachen und gleichzeitig in einen kontinuierlichen Prozeß mit äußerst geringer mechanischer Beanspruchung der Prills umgestalten kann.

Für die Abtrennung der Prills, die gegebenenfalls mit Hilfe einer geeigneten Transportvorrichtung vom Boden eines Absetzgefäßes entnommen werden, von der Kühl- und Treibflüssigkeit hat sich außerdem ein Spannwellensieb außerordentlich gut bewährt. (Unabhängig davon, welche Flüssigkeit von dem jeweiligen Prillgut abzutrennen ist, sollen Apparate für diese Aufgabe in dieser Beschreibung als "Entwässerungsvorrichtungen" bezeichnet werden.)

Das erfindungsgemäße Verfahren läßt sich auch zum Prillen anderer Stoffe in geeigneten Kühlflüssigkeiten verwenden. Die Kühl- und Treibflüssigkeit wird stets im Kreislauf geführt, so daß nur geringe Verluste (durch Restflüssigkeitsgehalte im Endprodukt und durch Verdunstung) auftreten können.

Vorzugsweise wird man Wasser als Transport- und Kühlmittel verwenden, jedoch kann man - je nach dem herzustellenden Prillgut - auch andere Flüssigkeiten, wie Tetralin oder Tetrachlorkohlenstoff, verwenden. In diesem Fall müßte man unter den entsprechenden Arbeitssicherheits-Vorschriften und gegebenenfalls in völlig luftabgeschlossenen Systemen arbeiten. Man wird daher, falls man als Kühlflüssigkeit Wasser nicht verwenden kann, inerte Lösungsmittel mit niedrigem Dampfdruck, zum Beispiel hochsiedende paraffinische Verbindungen, vorziehen.

Für das Prillen kommen u.a. Pech, thermoplastische Kunststoffe oder Natur- und Kunstharze in Frage. Vorbedingung ist nur, daß sich diese Stoffe bei nicht zu hohen Temperaturen aus ihren Schmelzen verformen lassen. Dabei müssen diese Schmelzen über entsprechende Siebböden oder andere Einrichtungen zur Tropfenbildung gebracht werden können.

Im allgemeinen wird man die Tropfen eine kurze Strecke durch den Gasraum, (vorzugsweise durch Luft) fallen lassen, ehe man die während des Falles durch Erstarren der Oberfläche entstehenden Prills in die Kühlflüssigkeit eintreten läßt.

Durch die heißen Schmelztropfen erwärmt sich die im Prillturm vorgelegte "Kühlflüssigkeit". Bevor die umgepumpte Flüssigkeit erneut als Kühl- bzw. Treibmedium verwendet werden kann, muß man ihr die aufgenommene Wärme wieder entziehen. Im allgemeinen wird man einen Teilstrom so intensiv kühlen,
daß nach dem erneuten Zumischen zum Hauptstrom die Temperatur vorliegt, die für die Kühlung des Prillguts und
das Betreiben der Treibstrahlpumpe optimal ist.

Die gleiche Menge Flüssigkeit, die durch die Treibstrahlpumpe abgezogen wird, muß dem Prillturm wieder zugeführt
werden, damit darin eine konstante Standhöhe aufrecht
erhalten bleibt.

Die Zuführung erfolgt über ein Rohr, das so tief in das
Kühlmedium eintaucht, daß die Oberfläche der Standflüssigkeit praktisch unbewegt bleibt.

Die Einstellung der Tauchtiefe muß vor Beginn des Prillens
erfolgen. Bei Schwefel als Prillgut und Wasser als Vorlageflüssigkeit ist eine Tauchtiefe von mindestens 200 mm
erforderlich. (Während des Prillens ergeben sich selbstverständlich durch die einfallenden Schwefeltropfen
Wirbel und sonstige Strömungserscheinungen.)

Die Schmelzezuführung erfolgt über eine beheizte Zuführungsvorrichtung, die durch eine (auswechselbare)
Lochplatte unten abgeschlossen ist.

Während des Prillbetriebs wird der Stand der Schmelze
so einreguliert, daß nach ihrem Austritt aus den Löchern
der Bodenplatte praktisch sofort Tropfenabriß erfolgt.

Bei zu niedrigem Stand würden sich die Löcher zusetzen und das Prillen unterbrochen werden. Bei zu hohem Stand käme es zur Ausbildung eines kontinuierlichen Strahls, es würden also überhaupt keine Prills entstehen.

Die Standhöhe wird vom Öffnungsverhältnis der Bodenplatte der Dosiervorrichtung bestimmt, d.h. vom Verhältnis der Summe der Flächen der Löcher zur Gesamtbodenfläche der Zuführungsvorrichtung. Das Öffnungsverhältnis läßt sich danach in $cm^2/cm^2$ oder in % angeben.

Die jeweils vorliegende Schmelze beeinflußt die Standhöhe durch ihre Viskosität.

Bei einer vorgegebenen Zuführungsvorrichtung mit festem (bzw. durch Auswechseln der Bodenplatte nur in wenigen Stufen variablen) Öffnungsverhältnis wird die Standhöhe der Schmelze am einfachsten durch den Stoffdurchsatz bei vorgegebenem Querschnitt eingestellt.

Die Durchmesser der Öffnungen der Bodenplatte sind auf die gewünschten Durchmesser bei den herzustellenden Prills abzustimmen. Im allgemeinen wird man nur 1/10 bis 1/2 des Durchmessers wählen, der maximal bei dem Prillgut erwünscht ist. Für Schwefelprills mit den (S. 1 im 2. Absatz) erwähnten Korngrößenbereichen sollten die Lochplatten der Schmelzezuführungsvorrichtung daher Lochdurchmesser von 0,5 - 2 mm aufweisen.

Für den Stand der Schwefelschmelze hat sich auf Grund vieler Versuchsreihen eine Höhe von 50 - 200 mm als optimal erwiesen.

Die Temperatur des zugeführten Schwefels lag im allgemeinen zwischen 120 und 140 °C, vorzugsweise bei 125 - 135 °C.

Die abreißenden Tropfen der jeweils zu prillenden Stoffe fallen von den Löchern der Zuführungsvorrichtung zur Oberfläche der Kühlflüssigkeit durch den Gasraum. Die hier beginnende Formgebung setzt sich bei Eintritt in das Kühlmedium fort und führt schließlich zu gut ausgebildeten Prills.

Durch Beobachtung der fallenden Tropfen wurde festgestellt, daß man den optimalen Abstand zwischen der Schmelzezuführungsvorrichtung und der Oberfläche der Kühlflüssigkeit im Prillturm dann eingestellt hat, wenn die Prillteilchen beim Auftreffen auf die Oberfläche nicht mehr zerkleinert werden. ( vergl. Seite 13, ab Zeile 20 bis Seite 14, Zeile 3)

Bei Schwefel war das im allgemeinen bei einem Abstand des Schmelzegefäßbodens zur Wasseroberfläche von 50 - 200 mm der Fall. Sowohl bei größeren als auch bei kürzeren Abständen hatten die hergestellten Prills eine schlechtere Kornform.

Die Temperatur und die Durchsatzgeschwindigkeit der vorgelegten Kühlflüssigkeit im Prillturm bestimmen die Abkühlungsgeschwindigkeit des herzustellenden Prillguts.

Die Abkühlungsgeschwindigkeit ist den Eigenschaften des jeweils zu pelletierenden Stoffes und den Dimensionen des verwendeten Prillturms anzupassen.

Bei Schwefel erwies es sich am günstigsten, die Temperatur der Umwälzflüssigkeit auf 10 - 70 $^{o}$C einzustellen, nach Möglichkeit wurde eine Wassertemperatur von 25 - 40 $^{o}$C eingehalten.

Außerdem werden die Oberflächeneigenschaften der Prillkörner durch im Kühlmedium anwesende Zusatzstoffe be-einflußt (vgl. 1. Absatz, Seite 2).

Bei Wasser als Vorlageflüssigkeit verwendet man im allgemeinen verschiedene Tenside, d.h. die Oberflächenspannung herabsetzende Stoffe, z.B. Polyethylenoxid-, Polypropylenoxid-Verbindungen oder Dimethyl- oder Phenylmethylsilikone. Bei den eigenen Versuchen wurden Alkylenoxid-Additionsprodukte in Mengen von 0,01 - 1 % dem umlaufenden Wasser zugesetzt.

Auch die Höhe des Prillturms vermag den Abkühlungsvorgang und damit die       Härte der Prills zu beeinflussen. Bei großen Höhen kann man gegebenenfalls mit höheren Kühltemperaturen der vorgelegten Flüssigkeit arbeiten. Da dabei auch die Menge der umzupumpenden Kühlflüssigkeit und damit die der Treibflüssigkeit ansteigt, wird man bezüglich der Höhe zu Kompromißlösungen gezwungen sein.

Ähnliche Überlegungen gelten auch für den Durchmesser des Prillturms und damit auch für den Durchmesser der Bodenplatte der Schmelzezuführungsvorrichtung.

Das untere Ende des Prillturms gemäß der vorliegenden Erfindung ist trichterförmig gestaltet, d.h. der Zylinder des Prillturms läuft schließlich in den Ansaugstutzen der Treibstrahlpumpe aus.

Die Treibstrahlpumpe bewirkt eine hydraulische, sehr schonende Förderung der Prills ohne jeglichen Abrieb.

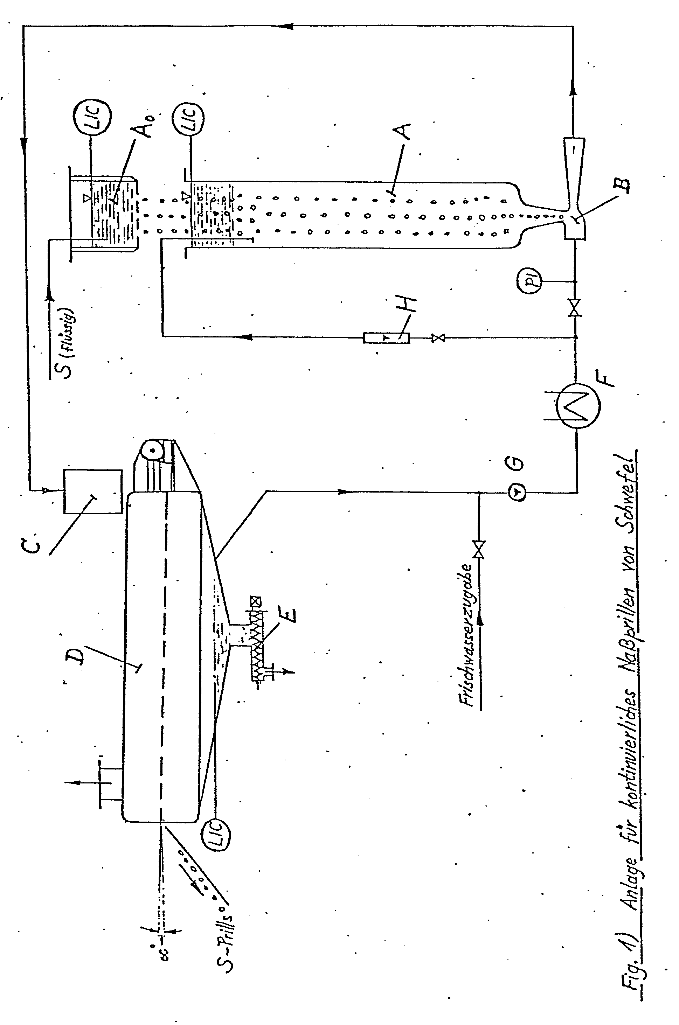

Der Treibstrahl (vergleiche Figur 1) selbst wurde im allgemeinen waagerecht durch die düsenförmige Verengung der Anordnung getrieben. Selbstverständlich könnte man ihn auch mehr oder weniger geneigt anordnen.

Der engste Durchmesser der Düse der Treibstrahlpumpe (B) muß - zur Vermeidung von Verstopfungen während des Betriebes - mindestens doppelt so groß sein wie der größte Teilchendurchmesser, der aufgrund der Prillbedingungen zu erwarten ist. Dieser gewünschte Durchmesser ist wiederum abhängig von Lochdurchmesser der verwendeten Bodenplatte der Schmelzezuführungsvorrichtung (s. 6. Absatz, Seite 5 ). Vorzugsweise werden allerdings für die Düsenöffnung der Pumpe größere Durchmesser gewählt, als dem doppelten Wert der maximal zulässigen Teilchendurchmesser entsprochen hätte; insbesondere wurde mit Düsendurchmessern vom vierfachen Wert des angestrebten maximalen Teilchendurchmessers gearbeitet.

Das Verhältnis zwischen Treibwasser und dem über dem Prillturm angesaugten Wasser wurde auf etwa 6 : 2 bis 1 eingestellt.

**0064311**

Das den geprillten Schwefel enthaltende Kühl- und Treibwasser wird einer Entwässerungsvorrichtung zugeführt. Wegen der verwendeten Tenside und des von ihnen verursachten Schäumens muß man im allgemeinen einen Absetzkasten C mit einer entsprechenden Tauchung und einer Austragungsvorrichtung dazwischenschalten.

Zur Entwässerung verschiedener spezieller Güter sind Spannwellensiebe bereits bekannt (vgl. Aufbereitungstechnik 14 (1973) 7, 421/422). Es konnte festgestellt werden, daß sie auch zum Abtrennen der Schwefelprills von Kühl- und Treibwasser hervorragend geeignet sind.

Diese Siebe führen gleichzeitig die mechanische Trocknung unter außerordentlich schonenden Bedingungen durch. Dabei können Restfeuchten von < 2 Gew.-% Wasser bei Anfangsfeuchten von 4 - 8 Gew.-% erreicht werden.

Im Gegensatz zu anderen geprüften mechanischen Entwässerungsvorrichtungen, bei denen zum Teil sehr hohe Beschleunigungskräfte auftreten, wurde bei der Entwässerung von Schwefelprills mit einem Spannwellensieb D keinerlei Kornbruch beobachtet.

Spannwellensiebe erzeugen beim Überleiten von Schwefelprills oder ähnlichen gekörnten Produkten einen sogenannten Trampolin-Effekt, durch den die Teilchen zwangsläufig einen relativ langen Weg durch den überstehenden Luftraum zurücklegen. Man kann diese Verzögerung zur Verbesserung des Trocknungseffektes ausnutzen, indem man ggf. vorgewärmte Trockenluft über das Sieb leitet.

Die Verweilzeit der Prills auf dem Sieb kann u.a. durch den Neigungswinkel und durch Veränderung der Frequenz des Siebes beeinflußt werden.

Das so erhaltene, vorentwässerte Prillgut kann gegebenenfalls nach bekannten Verfahren, z.B. unter Verwendung eines
Rieseltrockners, eines Fließbetttrockners, einer Trockentrommel
oder ähnlicher Einrichtungen oder nach sonstigen bekannten
Methoden nachgetrocknet werden.

Die Feinanteile aus dem Filtrat läßt man im Sumpf des Siebes
absetzen und zieht sie gelegentlich (mit einer Schnecke E) ab,
um sie nach Aufschmelzen der Schmelzevorlage wieder zuzuführen.
(Diese Verbindung zwischen Schnecke und Dosiergefäß ist
in der Zeichnung nicht ausgeführt.)

Die Flüssigkeitsmenge, die dem Umwälz-Kreislauf durch das
Prillgut und u.U. durch Verdunstung entzogen wird, muß
natürlich laufend ergänzt werden.

Analoges gilt selbstverständlich auch für die verwendeten
Netz- oder sonstigen Zusatzmittel. Durch die Kreislaufführung ergeben sich aber auch dabei gegenüber dem einfachen Chargenbetrieb Einsparungen.

Das erfindungsgemäße Verfahren (s. Figur 1) zum Prillen von
niedrigschmelzenden, in Wasser oder anderen Kühlflüssigkeiten
unlöslichen Stoffen, insbesondere zum Naßprillen von Schwefel,
mit Hilfe eines mit Kühlflüssigkeit gefüllten Prillturms (A)
verbessert das Verfahren nach dem Stand der Technik durch
die Verwendung einer Treibstrahlpumpe zum Absaugen des Prill-
Flüssigkeitsgemisches. Dadurch werden die Prills in besonders
schonender Weise ausgetragen. Außerdem werden dabei
Kreisläufe für die Kühlflüssigkeit und für die Gesamtflüssigkeit ermöglicht, so daß man zu einem kontinuierlichen Verfahren gelangt.

Das neue Verfahren ist also dadurch gekennzeichnet, daß man

a. die gegebenenfalls Tenside oder ähnliche Additive enthaltende Kühlflüssigkeit,gemeinsam mit den gebildeten Prills,

b. stetig durch eine Treibstrahlpumpe (B) am unteren Ende des Prillturms (A) absaugt, während man gleichzeitig

c. vom Filtrat der Kühl- und Treibflüssigkeit (nach e) solche Mengen dem Prillturm zuführt, daß sich unter ständigem Austausch des Kühlmediums ein konstantes Flüssigkeitsniveau im Kühlturm einstellt,und daß man

d. das abgesaugte Fest-Flüssig-Gemisch, gemeinsam mit der Treibflüssigkeit,- gegebenenfalls unter Zwischenschaltung   eines Absetzbehälters (C) mit getauchter Austragsvorrichtung - einer Entwässerungsvorrichtung (D) zuführt,

e. von der man das Filtrat nach Ergänzung der mit den Prills (bzw. durch Verdunstung) ausgetragenen Mengen an Kühlflüssigkeit und Tensiden durch entsprechende Frischzugaben -

     als Treibflüssigkeit für die Treibstrahlpumpe (B)
     (gemäß b) und
     zur Kühlung im Prillturm (A) gemäß c
verwendet,und man

f. das von der Hauptmenge der Kühlflüssigkeit befreite Prillgut in bekannten Einrichtungen weitgehend von den Restflüssigkeitsmengen befreit.

Zur schonenden Behandlung der Prills beim Absaugen
der Treibstrahlpumpe kommt außerdem die schonende
Behandlung bei der Verwendung des Spannwellensiebes (D)
zur Flüssigkeitsabtrennung hinzu. (vgl. 2.-5. Absatz, S. 9)
Die (feststoff-freien) Überläufe des Absetzkastens C
und u.U. der Entwässerungsvorrichtung D werden,
- falls Einrichtungen dafür vorgesehen sind,- direkt
mit dem Filtrat gemäß e vereinigt. Sie gehören also
mit zur gesamten Umwälzflüssigkeit.

Der Absetzkasten C mit der Austragsvorrichtung könnte
durch eine einfache Aufgabe-Vorrichtung ersetzt werden,
wenn man nicht-schäumende Tenside einsetzen könnte.

Wie die Fig. 1 zeigt, gehören zu den beiden Kreisläufen
(a und d) noch entsprechende Niveauregler LIC, ein Druckmeßgerät PI und ein Strömungsmeßgerät H. Die Temperaturkontrollgeräte, die Regelventile und die Verzweigungsstellen wurden nicht besonders dargestellt bzw. mit Buchstaben bezeichnet.

Mit der Frischwasserzugabe erfolgt auch die der Tenside.
(Als nicht zu dieser Erfindung gehörend, wird - abgesehen
von 4.Absatz, S. 7 - der jeweilige Zusatz bei den Beispielen nicht gesondert erwähnt.)

Zur weiteren Erläuterung des erfindungsgemäßen Verfahrens
werden im folgenden einige Beispiele angeführt, ohne
dadurch das Verfahren beschränken zu wollen.

**Beispiel 1:**

Geschmolzener Schwefel mit einer Temperatur von 125 bis 140 $^{\circ}$C wird kontinuierlich mit einem Durchsatz von 500 kg/h der Schmelzedosiervorrichtung $A_o$ (s. Fig. 1) zugeführt, und zwar in der Weise, daß sich auf dem Lochboden eine Schicht Schwefelschmelze von 100 bis 150 mm Höhe einstellt.

Der flüssige Schwefel tritt durch die Bohrungen der Lochplatte in den Luftraum ein, der sich zwischen der Wasseroberfläche und der Lochplatte befindet. Der optimale Abstand ist 50 bis 100 mm.

Beim senkrechten Fall durch den Luftraum reißen die Schmelzströme zu einzelnen Tropfen unterschiedlicher Größe auf. Diese treten in das Wasser des Prillturms (A) ein, wobei direkt nach dem Eintritt in das Wasser die Tropfenoberfläche erstarrt und damit wesentliche Veränderungen der Kornform nicht mehr vor sich gehen können. Auf dem Weg bis zum Verlassen des Prillturms sind die Prills dann weitgehend abgekühlt.

Bei zu großem Abstand zwischen Lochplatte und Wasseroberfläche ist der Aufprall der Tropfen so stark, daß sich eine entsprechend höhere Menge von Tropfen in kleinere und kleinste Tröpfchen zerteilt. Dadurch entsteht ein erhöhter Feingutanteil. Außerdem werden die größeren Tropfen stark verformt.

0064311

Wird der Abstand zu klein gehalten, findet kein Tropfenabriß innerhalb der Schmelzeströme statt, und es wird ein
schlecht geformtes Prillgut erhalten.

Die bei Beachtung der optimalen Bedingungen erhaltenen,
gut geformten Prills unterschiedlicher Größe sinken durch
den Prillturm einer mit dem Austrittsstutzen des Prillturmes verbundenen Treibstrahlpumpe (B) zu. Hier werden
sie vom umlaufenden Wasser, mit dem die Treibstrahlpumpe
beaufschlagt wird, erfaßt und über eine Leitung einer
Entwässerungsvorrichtung D zugeführt, in der die Prills
vom Umlaufwasser getrennt werden.

Das abgetrennte Wasser gelangt mit Hilfe einer Umwälzpumpe G nach Passieren eines Kühlers (F) wieder zur Treibstrahlpumpe (B), vor der ein Teilstrom abgezweigt und über
eine Tauchung von mindestens 200 mm in die obere Hälfte
des Prillturmes eingeleitet wird.

Die Wassertemperatur sollte 50 $^{\circ}$C nicht überschreiten,
bei höherer Temperatur wird sehr viel Feingut gebildet.
Die besten Ergebnisse wurden bei 25 bis 40 $^{\circ}$C Wassertemperatur erzielt.

Kennzahlen der nach diesem Verfahren hergestellten Schwefelprills:

| | |
|---|---|
| Korngröße 1 - 4 mm : | >95% |
| Schüttgewicht: | 1,15 kg/l |
| Schüttwinkel: | 32 - 34 $^{\circ}$ |
| Wassergehalt nach Spannwellensieb: | <2 % |
| Kornform: | gut ausgebildete Prills, keine Sekundäreagglomerate |

Beispiel 2:     (nicht optimal, weil Kühlwasser mit einer
                Temperatur oberhalb des nach Anspruch 10 zu bevorzugenden Bereichs verwendet wurde)

Man verfährt wie unter Beispiel 1 angegeben mit dem Unterschied, daß die Temperatur des Umlaufwasser 75 bis 80 $^{o}$C
beträgt. Hiernach erhält man wesentlich schlechter ausgebildete Schwefelpellets und einen erheblich höheren Feinanteil. (Die Fraktion mit Korngrößen < 1 mm erreichte > 10 %.)

Beispiel 3:     (nicht optimal, weil die Versuchsbedingungen abweichend von den in den Ansprüchen 12,
                13 und 14 empfohlenen Bereichen gewählt wurden)

Der Schmelzedosiervorrichtung A, die mit einem Lochboden
mit 2,5 mm-Bohrungen ausgerüstet ist, werden stündlich
etwa 600 kg Schwefelschmelze zugeführt, wobei sich eine
Schmelzeschicht von etwa 30 mm über dem Lochboden einstellt. Die Temperatur des Vorlaufwassers beträgt < 20 $^{o}$C.
Der Abstand des Lochbodens von der Wasseroberfläche beträgt
etwa 40 mm.

Das erhaltene Prillgut ist deutlich unregelmäßiger geformt
als beim Produkt aus Beispiel 1. Das Kornspektrum weist einen
erheblichen Anteil an Grobkorn auf.

Beispiel 4:

Geschmolzener Schwefel (Einsatz ca. 400 kg/h) wird kontinuierlich der Schmelzedosiervorrichtung (A) der Prilleinrichtung in der Weise zugeführt, daß die Standhöhe
über der Lochplatte nicht größer als 200 mm ist. Der flüssige Schwefel verläßt durch die Bohrungen (1 mm) die Lochplatte und erreicht nach kurzem Fall durch Luft (80mm) die Oberfläche des Prillturmes (A). Die in das Umlaufwasser, dessen Temperatur etwa 25 bis 30 $^{o}$C beträgt, eintauchenden Tropfen verfestigten sich zu gut ausgebildeten, sphärischen Pellets, deren Korngröße zwischen 1 bis 4 mm liegt. Die Gutkornausbeute erreicht bei dieser Fahrweise einen Wert von > 95 %. Der Feuchtigkeitsgehalt von anfangs 2 Gew.-% $H_2O$ konnte mit Hilfe eines Rieseltrockners auf < 0,5 Gew.-% und durch Durchblasen von etwa 110 $^{o}$C warmer Luft durch eine Mehrkornschicht auf < 0,1 Gew.-% gesenkt werden.

0064311
o.z. 3718-H

Patentansprüche:

1. Verfahren zum Prillen von niedrig schmelzenden, in Wasser oder anderen Kühlflüssigkeiten unlöslichen Stoffen, insbesondere von Schwefel, durch Eintretenlassen der Schmelze des zu prillenden Stoffes durch die Lochplatte einer Schmelzezuführungsvorrichtung hindurch zuerst in eine gasförmige Umgebung unter Ausbildung einzelner Tropfen und dann in eine Kühlflüssigkeit hinein, in der sich die Prills abkühlen und verfestigen, d a d u r c h   g e k e n n z e i c h n e t , daß man

a. die gegebenenfalls Tenside oder ähnliche Additive enthaltende Kühlflüssigkeit gemeinsam mit den gebildeten Prills

b. stetig durch eine Treibstrahlpumpe am unteren Ende des Prillturms absaugt, während man gleichzeitig

c. vom Filtrat der Kühl- und Treibflüssigkeit (nach e) solche Mengen dem Prillturm zuführt, daß sich unter ständigem Austausch des Kühlmediums ein konstantes Flüssigkeitsniveau im Prillturm einstellt, und daß man

d. das abgesaugte Fest-Flüssig-Gemisch, gemeinsam mit der Treibflüssigkeit, gegebenenfalls unter Zwischenschaltung eines Absetzbehälters mit einer getauchten Austragvorrichtung einer Entwässerungsvorrichtung zuführt,

e. von der man das Filtrat nach Ergänzung der mit
den Prills (bzw. durch Verdunstung) ausgetragenen
Mengen an Kühlflüssigkeit und Tensiden durch
entsprechende Frisch-Zugaben erneut
als Treibflüssigkeit für die Treibstrahlpumpe
gemäß b und
zur Kühlung im Prillturm gemäß c
verwendet, und man

f. das von der Hauptmenge der Kühlflüssigkeit befreite
Prillgut in bekannten Einrichtungen weitgehend von
den Restflüssigkeitsmengen befreit.

2. Verfahren nach Anspruch 1, d a d u r c h
g e k e n n z e i c h n e t , daß man mindestens
einen Teilstrom der umgewälzten Flüssigkeit vor der
Weiterverwendung im Umwälzkreislauf kühlt
und so eine für das Prillgut optimale Temperatur im
Kühlturm einstellt.

3. Verfahren nach Anspruch 1 und/oder 2, d a d u r c h
g e k e n n z e i c h n e t , daß man das Kühlmedium durch eine so tiefe Tauchung des Einleitungsrohres in die Standflüssigkeit im Prillturm einführt,
daß deren Oberfläche praktisch unbewegt bleibt.

4. Verfahren nach Anspruch 1 und/oder 2 und/oder 3,
d a d u r c h   g e k e n n z e i c h n e t , daß
man für die Düse der Treibstrahlpumpe einen engsten
Durchmesser wählt, der mindestens doppelt, bevorzugt
vier und mehr mal so groß ist, wie der größte noch
zulässige Durchmesser, der für das Prillgut vorgesehen
ist.

5. Verfahren nach Anspruch 1 und einem oder mehreren der Ansprüche 2 bis 4, d a d u r c h  g e k e n n - z e i c h n e t , daß man für die Bohrungen in der Lochplatte der Schmelzezuführungsvorrichtung Durchmesser wählt, die 1/10 bis 1/2 des gewünschten maximalen Prilldurchmessers entsprechen.

6. Verfahren nach Anspruch 1 und einem oder mehreren der Ansprüche 2 bis 5, d a d u r c h  g e k e n n - z e i c h n e t , daß man den Stand der Schmelze in der Zuführungsvorrichtung so einstellt, daß nach dem Austritt der Schmelze aus der Lochplatte praktisch sofort Tropfenabriß erfolgt.

7. Verfahren nach Anspruch 1 und einem oder mehreren der Ansprüche 2 bis 6, d a d u r c h  g e k e n n - z e i c h n e t , daß man den Abstand der Lochplatte der Schmelzezuführungsvorrichtung zur Oberfläche der Kühlflüssigkeit im Prillturm so wählt, daß die im Gasraum gebildeten Tropfen beim Eintauchen in die Kühlflüssigkeit die gebildete Form beibehalten.

8. Verfahren nach Anspruch 1 und einem oder mehreren der Ansprüche 2 bis 7, d a d u r c h  g e k e n n - z e i c h n e t , daß man das Prillgut von der Umwälzflüssigkeit mit Hilfe von mechanischen Entwässerungseinrichtungen, vorzugsweise mit einem Spannwellensieb abtrennt.

9. Verfahren zum Prillen von Schwefel aus einer Schwefelschmelze mit einer Temperatur von 120 bis 140 °C nach
Anspruch 1, d a d u r c h   g e k e n n -
z e i c h n e t , daß man als Umwälzflüssigkeit
Tenside oder ähnliche Additive enthaltendes Wasser
verwendet.

10. Verfahren zum Prillen von Schwefel nach Anspruch 1 und
einem oder mehreren der Ansprüche 2 bis 9,
d a d u r c h   g e k e n n z e i c h n e t ,
daß man die Temperatur der Umwälzflüssigkeit auf
10 bis 70 °C, vorzugsweise auf 25 bis 40 °C einstellt.

11. Verfahren für das Prillen von Schwefel nach Anspruch 1
und einem oder mehreren der Ansprüche 2 bis 10,
d a d u r c h   g e k e n n z e i c h n e t , daß
man das zuzuführende Kühlwasser über eine Tauchung
von mindestens 200 mm Tiefe in den Prillturm einführt.

12. Verfahren für das Prillen von Schwefel nach Anspruch 1
und einem oder mehreren der Ansprüche 2 bis 11,
d a d u r c h   g e k e n n z e i c h n e t ,
daß man für die Bohrungen in der Lochplatte der
Schmelzezuführungsvorrichtung Durchmesser von
0,5 bis 2 mm wählt.

13. Verfahren zum Prillen von Schwefel nach Anspruch 1 und einem oder mehreren der Ansprüche 2 bis 12, d a d u r c h   g e k e n n z e i c h n e t , daß man die Höhe der Schmelze über der Lochplatte der Schmelzezuführungsvorrichtung auf etwa 50 bis 200 mm einstellt.

14. Verfahren zum Prillen von Schwefel nach Anspruch 1 und einem oder mehreren der Ansprüche 2 bis 13, d a d u r c h   g e k e n n z e i c h n e t , daß man den Abstand der Lochplatte der Schmelzezuführungsvorrichtung von der Wasseroberfläche im Prillturm auf etwa 50 - 200 mm einstellt.

15. Geprillte Stoffaggregate, hergestellt nach Anspruch 1 und einem oder mehreren der Ansprüche 2 bis 8.

16. Geprillter Schwefel, hergestellt nach Anspruch 1 und einem oder mehreren der Ansprüche 2 bis 14.

7473/40-lö

Fig. 1)  Anlage für kontinuierliches Naßprillen von Schwefel

# 0064311

Nummer der Anmeldung

## EUROPÄISCHER RECHERCHENBERICHT

Europäisches Patentamt

EP 82 20 0475

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-3 550 195 (R.E. CAMPBELL) <br><br> * Insgesamt * <br><br> --- | 1-3,5, 8,12, 15,16 | B 01 J 2/06 <br> C 01 B 17/00 <br> C 10 C 3/16 |
| Y | US-A-4 149 837 (R. BAKER) <br><br> * Spalte 2, Zeile 7 - Spalte 3, Zeile 13; Spalte 5, Zeilen 1-48; Figuren 1,3 * <br><br> --- | 1,2,6, 8,14-16 | |
| A | BE-A- 673 122 (ELLIOTT ASSOCIATED DEVELOPMENT LIMITED) <br> * Seite 1, Absatz 1 - Seite 4, Absatz 2; Figur 1 *& DE - B - 1 300 514 (Cat. D,A) <br><br> --- | 9,12, 16 | |
| A | NL-C- 88 808 (MONTECATINI) <br> * Spalte 3, Zeile 6 - Spalte 4, Zeile 18; Figur 3 * <br><br> ----- | 1 | RECHERCHIERTE SACHGEBIETE (Int. Cl. ³) <br><br><br> B 01 J <br> C 10 C <br> C 01 B |

Der vorliegende Recherchenbericht wurde für alle Patentansprüche erstellt.

| Recherchenort <br> DEN HAAG | Abschlußdatum der Recherche <br> 10-08-1982 | Prüfer <br> PYFFEROEN K. |
|---|---|---|